Europäisches Patentamt

European Patent Office

Office européen des brevets

(11) Veröffentlichungsnummer: **0 479 036 A1**

## (12) EUROPÄISCHE PATENTANMELDUNG

(21) Anmeldenummer: **91115791.5**

(22) Anmeldetag: **18.09.91**

(51) Int. Cl.5: **F16K 7/07**

(30) Priorität: **04.10.90 DE 4031228**

(43) Veröffentlichungstag der Anmeldung:
**08.04.92 Patentblatt 92/15**

(84) Benannte Vertragsstaaten:
**DE ES FR IT**

(71) Anmelder: **AKO ARMATUREN-VERTRIEBS GmbH**
**Beckerweg 6**
**W-6097 Trebur 2 -Geinsheim(DE)**

(72) Erfinder: **Kopp, Antoine**
**Berliner Strasse 54**
**W-6097 Trebur 2(DE)**

(74) Vertreter: **Katscher, Helmut, Dipl.-Ing.**
**Bismarckstrasse 29**
**W-6100 Darmstadt(DE)**

(54) **Manschettenventil.**

(57) Ein Manschettenventil weist ein Ventilgehäuse (1) auf, in dem eine schlauchförmige, mit einem Druckmittel beaufschlagbare Ventilmanschette (3) angeordnet ist. Die Ventilmanschette (3) ist mit ihren beiden Enden (4) jeweils zwischen einem Gehäuseflansch (2) und einem daran angeschraubten Flanschring (5) eingespannt. Der Flanschring (5) trägt als Verkleidung eine Flanschmanschette (8) aus einem Elastomer. Dadurch ist die Durchlaßbohrung (9) des Flanschrings (5) mit den anschließenden Bereichen mit einem Elastomer verkleidet. Wenn an dieser Verkleidung ein Verschleiß aufgetreten ist, genügt es, die Flanschmanschette (8) von dem Flanschring (5) abzunehmen und auszuwechseln.

FIG.1

EP 0 479 036 A1

Die Erfindung betrifft ein Manschettenventil mit einem Ventilgehäuse, in dem eine schlauchförmige, mit einem Druckmittel beaufschlagbare Ventilmanschette angeordnet ist, die mit Ihren beiden Enden jeweils zwischen einem am Ventilgehäuse ausgebildeten Gehäuseflansch und einem daran angeschraubten Flanschring eingespannt ist, der mindestens an seiner zentralen Durchlaßbohrung und den anschließenden Bereichen seiner Stirnflächen eine elastische Verkleidung trägt.

Manschettenventile, die auch als Quetschventile oder Schlauchquetschventile bezeichnet werden, dienen als Absperrarmaturen beispielsweise in Rohrleitungen. Die Betätigung des Manschettenventils erfolgt durch Beaufschlagung der Ventilmanschette mit einem Druckmittel, beispielsweise Druckluft oder Druckflüssigkeit, die in den Raum zwischen dem Ventilgehäuse und der Ventilmanschette zugeführt wird. Diese Manschettenventile haben den Vorteil, daß im geöffneten Zustand der Durchgang völlig frei ist, so daß praktisch keine Strömungsverluste auftreten.

Die beiden Flanschringe, mit denen die Ventilmanschette an dem jeweils zugeordneten Gehäuseflansch befestigt wird, sind bei der normalen Ausführung des Manschettenventils die einzigen Metallteile, die innerhalb des Manschettenventils mit dem hindurchströmenden Medium in Berührung kommen. In dem zwischen den beiden Flanschringen liegenden Bereich kommt das Medium nur mit der aus gewebeverstärktem Elastomer bestehenden Ventilmanschette in Berührung.

Beim Einsatz für chemisch und/oder mechanisch agressive Medien muß auch im Bereich der beiden Flanschringe eine Berührung des strömenden Mediums mit metallischen Teilen vermieden werden. Hierzu wird bei einem bekannten Manschettenventil der eingangs genannten Gattung eine aus Hartgummi bestehende Verkleidung des Flanschrings vorgesehen, die sich über dessen zentrale Durchlaßbohrung und mindestens die anschließenden Bereiche seiner Stirnflächen erstreckt. Diese Gummierung wird bei dem bekannten Manschettenventil auf den metallischen Flanschring fest aufvulkanisiert.

Wenn ein spürbarer Verschleiß dieser aufvulkanisierten Gummierung festgestellt wird, muß der gesamte Flanschring ausgewechselt werden. Wegen der Notwendigkeit einer Vulkanisierung ist die Auswahl der als Verkleidung zu verwendenden Materialien auf vulkanisierbare Gummisorten beschränkt.

Aufgabe der Erfindung ist es daher, ein Manschettenventil der eingangs genannten Gattung so auszugestalten, daß der bei einem Verschleiß erforderliche Reparaturaufwand verringert wird und daß eine Anpassung der für die Verkleidung des Flanschrings verwendeten Materialien an den jeweiligen Bedarfsfall ermöglicht wird.

Diese Aufgabe wird erfindungsgemäß dadurch gelöst, daß der Flanschring als Verkleidung eine auswechselbare Flanschmanschette aus einem Elastomer trägt, die den Flanschring an der zentralen Durchlaßbohrung und den anschließenden Bereichen seiner Stirnflächen umhüllt.

Hierbei ist nur noch die auswechselbare Flanschmanschette als Verschleißteil anzusehen. Im Verschleißfall genügt es daher, den Flanschring abzuschrauben und nur die Flanschmanschette auszuwechseln.

Die Flanschmanschette kann aus unterschiedlichsten elastischen Materialien hergestellt werden, so daß eine optimale Anpassung an den jeweiligen Bedarfsfall möglich ist. Dadurch kann für die auswechselbare Flanschmanschette jeweils das Material gewählt werden, das den auftretenden chemischen und/oder mechanischen Angriffen des strömenden Mediums am besten widersteht.

Durch die Verwendung der auswechselbaren Flanschmanschetten wird auch die Lagerhaltung wesentlich flexibler, um Manschettenventile für unterschiedliche Einsatzfälle bereitzustellen. Es genügt, unterschiedliche Flanschmanschetten auf Lager zu halten; dabei können für alle Einsatzfälle die gleichen Flanschringe verwendet werden, so daß der Aufwand für deren Lagerhaltung wesentlich verringert wird.

Die Flanschmanschetten lassen sich leicht von Hand auswechseln. Die Anordnung einer zusätzlichen Dichtung im Bereich des Flanschrings ist auch auf der der Ventilamschette abgekehrten Außenseite nicht mehr erforderlich.

Vorteilhafte Ausgestaltungen des Erfindungsgedankens sind Gegenstand von Unteransprüchen.

Die Erfindung wird nachfolgend an einem Ausführungsbeispiel näher erläutert, das in der Zeichnung dargestellt ist. Es zeigt:

Fig. 1 ein Manschettenventil im Längsschnitt und

Fig. 2 in einem vergrößerten Teilschnitt einen Flanschring des in Fig. 1 gezeigten Manschettenventils mit einer Flanschmanschette.

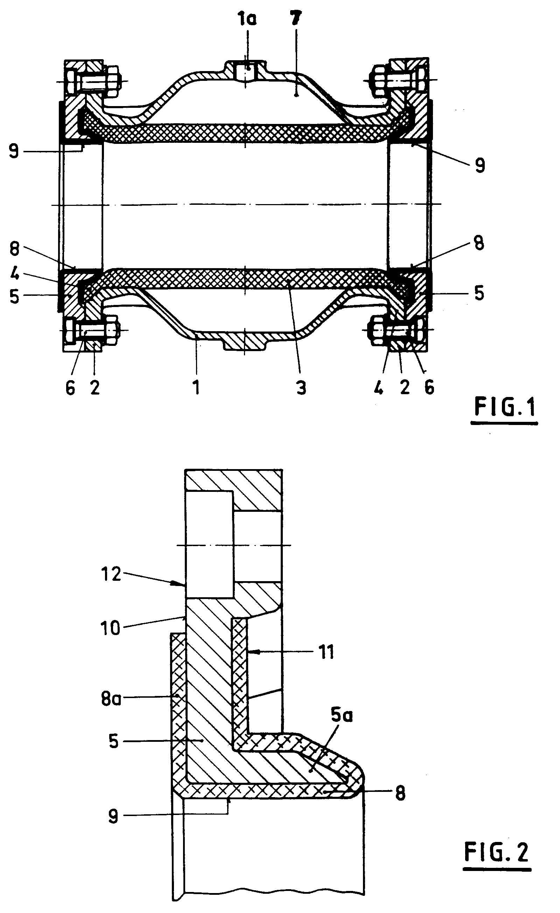

Das in Fig. 1 dargestellte Manschettenventil weist ein aus Gußmaterial bestehendes Ventilgehäuse 1 auf, das an seinen beiden gegenüberliegenden Seiten jeweils einen Gehäuseflansch 2 besitzt. Im Inneren des Ventilgehäuses 1 ist eine aus einem Elastomer bestehende Ventilmanschette 3 angeordnet, die eine (nicht dargestellte) Gewebeeinlage zur Verstärkung aufweisen kann.

Die flanschartig über den Außendurchmesser der Ventilmanschette 3 vorstehenden Einspannwulste 4 an beiden Enden der Ventilmanschette 3 sind jeweils zwischen dem Gehäuseflansch 2 und einem daran stirnseitig angeschraubten Flanschring 5 eingeklemmt und befestigt. Hierzu dienen Flanschschrauben 6, zwischen denen (in Fig. 1 nicht dargestellt) jeweils Durchgangsbohrungen zur Verbindung des Manschettenventils mit den anschließenden Rohrleitungen oder anderen Armaturen vorgesehen sind.

Der Raum 7 zwischen dem Ventilgehäuse 1 und der Ventilmanschette 3 kann mit einem Druckmittel beaufschlagt werden, beispielsweise Druckluft, einem Druckgas oder einer Druckflüssigkeit, die dem Ventilgehäuse 1 durch einen seitlichen Leitungsanschluß 1a zugeführt werden, um daß Manschettenventil zu schließen.

Das in Fig. 1 dargestellte Manschettenventil ist für den Einsatz für chemisch und/oder mechanisch aggressive Medien bestimmt. Deshalb dürfen keine Metallteile mit dem strömenden Medium in Berührung kommen.

Wie in Einzelheiten in Fig. 2 dargestellt ist, ist der metallische Flanschring 5 mit einer auswechselbaren Flanschmanschette 8 aus einem Elastomer versehen. Die Flanschmanschette 8 umhüllt den Flanschring 5 an seiner zentralen Durchlaßbohrung 9 und den anschließenden Bereichen seiner Stirnflächen 10 und 11.

Der Flanschring 5 weist einen zur Ventilmanschette 3 hin vorspringenden zylindrischen Abschnitt 5a auf, der vollständig von der Flanschmanschette 8 umhüllt ist. Radial außerhalb dieses zylindrischen Abschnittes 5a schließt sich die Stirnfläche 11 an, mit der der Flanschring gegen den Rand 4 der Ventilmanschette 3 drückt. Bei dem dargestellten Ausführungsbeispiel ist diese Stirnfläche 11 vollständig von der Flanschmanschette 8 bedeckt.

Die außenliegende Stirnfläche 10 des Flanschrings 5 wird von der Flanschmanschette 8 nur in einem an die zentrale Durchlaßbohrung 9 anschließenden kreisförmigen Abschnitt 8a bedeckt, dessen Außendurchmesser kleiner als der Schraubenkranz 12 der Flanschschrauben 6 ist.

Die Flanschmanschette 8 kann aus Gummi oder einem anderen Elastomer bestehen. Wenn durch das aggressive Medium im Bereich der Durchlaßbohrung 9 ein Verschleiß aufgetreten ist, wird die Flanschmanschette 8 nach dem Abschrauben des Flanschrings 5 gegen eine neue Flanschmanschette ausgewechselt, und der Flanschring 5 wird wieder angeschraubt.

**Patentansprüche**

1. Manschettenventil mit einem Ventilgehäuse, in dem eine schlauchförmige, mit einem Druckmittel beaufschlagbare Ventilmanschette angeordnet ist, die mit Ihren beiden Enden jeweils zwischen einem am Ventilgehäuse ausgebildeten Gehäuseflansch und einem daran angeschraubten Flanschring eingespannt ist, der mindestens an seiner zentralen Durchlaßbohrung und den anschließenden Bereichen seiner Stirnflächen eine elastische Verkleidung trägt, dadurch gekennzeichnet, daß der Flanschring (5) als Verkleidung eine auswechselbare Flanschmanschette (8) aus einem Elastomer trägt, die den Flanschring (5) an der zentralen Durchlaßbohrung (9) und den anschließenden Bereichen seiner Stirnflächen (10, 11) umhüllt.

2. Manschettenventil nach Anspruch 1, dadurch gekennzeichnet, daß die Flanschmanschette (8) die an der Ventilmanschette (3) anliegende Stirnfläche (11) des Flanschrings (5) vollständig bedeckt.

3. Manschettenventil nach Anspruch 1, dadurch gekennzeichnet, daß die Flanschmanschette (8) die außenliegende Stirnfläche (10) des Flanschrings (5) in einem kreisringförmigen Abschnitt (8a) bedeckt, dessen Außendruchmesser kleiner als der Schraubenkranz (12) der Flanschverschraubung ist.

**FIG.1**

**FIG. 2**

**Europäisches Patentamt**

## EUROPÄISCHER RECHERCHENBERICHT

Nummer der Anmeldung

| EINSCHLÄGIGE DOKUMENTE | | | EP 91115791.5 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | DE - A - 2 406 530 (APPARATE-SPEZIAL-TECHNIK) * Gesamt * -- | 1 | F 16 K 7/07 |
| A | DE - A - 3 221 225 (PASSAVANT-WERKE) * Gesamt * -- | 1 | |
| A | DE - B - 1 650 558 (SCHNABEL) * Spalte 2, Zeilen 20-25 * -- | 1 | |
| A | DE - A - 2 014 058 (RICHTER KG) * Gesamt * ---- | 1 | |

RECHERCHIERTE SACHGEBIETE (Int. Cl⁵)

F 16 K   7/00
F 16 K 27/00
F 16 L 23/00

Der vorliegende Recherchenbericht wurde für alle Patentansprüche erstellt.

| Recherchenort | Abschlußdatum der Recherche | Prüfer |
|---|---|---|
| WIEN | 10-12-1991 | FIETZ |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82